# EUROPEAN PATENT APPLICATION

(11) **EP 1 892 934 A1**
(43) Date of publication of application: **27.02.2008**
(21) Application number: 06291341.3
(22) Date of filing: 22.08.2006
(51) Int. Cl.: H04M 1/64, H04M 3/42, H04M 1/725

(54) **Simulated ring tone comprising the caller's voice in real time**

(71) Applicant: France Télécom, 75015 Paris (FR)
(72) Inventor: Boulic, Claude, Seocho-Gu Seoul 137-856 (KR)

(57) **Abstract**

A system for generating a phone call through nodes of a network from a first node (4A) to a second node (4B) is operable respectively by a first and a second user. A third node (2) comprises a first interface (3A) operable to receive a call and a call identifier of the second node from the first node and a second interface (3B) operable to call the second node according to the call received on the first interface server and to transmit sensorial data of the first user to the second node when answering. The second node is arranged with a program (5) for detecting a call from the third node (2), for answering to the third node before notifying the second user, for allowing to give out received sensorial data of the first user on the second node (4B) and for inhibiting transmission from the second node of sensorial data of the second user up to the moment when the second user activates said transmission of sensorial data.

## Description

The invention is in the field of telecommunications on fixed line, mobile or internet.

Nowadays Caller Identification (CID) exists that allows the recipient of a call to identify the caller and to decide to answer the call or not. Name identification also exists. The recipient of the call sees the number of the caller, may recognize this number and determine the identity of the caller, but he does not know the reason of the call. It is the same in the case of name identification.

Multimedia extensions of CID exist: a pre-registered image file, a pre-registered video file, a pre-registered sound file, even a pre-registered file containing music can be delivered at the same time the CID is delivered. The recipient of the call may then have more information about the caller and the reason of the call. The recipient of the call sees the number of the caller, may see or hear additional information about the identity of the caller and the reason of the call. The downside is that the caller has to previously record said information, which are consequently always the same and not adapted in real time to a particular context.

Different from a regular phone call, we know "push to talk" communication on mobile telephone, that allows a user A to contact a group of users by pressing on a key of his mobile phone and speaking to the persons as long as the key is hold down. The recipient of the call hears the voice of the caller without previously hearing any ring tone, and can listen to information about the identity of the caller and the reason of the call before talking to the caller. The downside is that "push to talk" is half-duplex: one has to wait to talk and press a key on the mobile phone while talking. When a first user speaks, a second user can not speak at the same time. There is no regular / standard telephone call established between the phone terminals of the parties.

It is possible, when using a mobile phone with a pedestrian kit to have the phone automatically answer a call after a few seconds of ring tone. Before the call is answered, if this is not immediate when the call is received, the caller will hear a ring tone. Once the call is answered by the mobile phone, after a few seconds of ring tone, the caller can hear what the called person says, or hear the ambient environment sound where the called terminal is located, at least until the called person orders her terminal to stop transmitting voice / sound towards the caller. The called person might not have the time to identify the caller or the reason of the call before the call is automatically answered by the phone.

The international patent application WO 2005/064895 A1 presents a system to push (using a SMS for example) a sender-personalized notification such as a ring tone, a colour picture, a video, multimedia message, a vibration, a text, audible cues, a temperature or other sensory indication to a receiving wireless device upon initiation of the communication. It is not possible for the caller to send live real-time voice (combined or not with music, or real-time video, combined or not with music or a multimedia file) as a ring tone.

When using a fixed-line telephone equipped with answering and voice recording functions and a loud-speaker at home for example, it is possible for the recipient of the call to hear the voice of the caller in real-time before deciding to interact with the caller. Answering by the fixed-line telephone can be configured after 10 seconds of ring tone for example, to give the opportunity to the recipient to answer the call before the terminal automatically answers and invites the caller to leave a message. The fixed-line telephone can also be configured to immediately answer the incoming call. Using answering machine is not entirely satisfying, for example :
_ the caller does not know that the recipient has a telephone equipped with an answering machine, that the answering machine is on when the caller calls, and that the loud-speaker of the answering machine is on when the caller calls. If the loud speaker is off, nobody (the recipient of the call included) will hear what the caller says of the tentative simulated real-time voice ring tone. If the loud speaker is off, the answering machine will answer the call anyway, and the caller will not get the desired effect.
_ if the fixed-line telephone is always on with the loud speaker on, it is quite inconvenient at night to be awaken by all incoming calls. Chances are the loudspeaker will be turned off if the recipient of the call does not want to be awaken during the night by incoming calls and people leaving a message on the answering machine. In that case, it will not be possible for people calling to get the desired effect (simulated real-time voice ring tone), although the answering machine would have answered the call.
_ it is likely that the answering machine will not be selective: it will answer all calls. It can not distinguish a call made by a caller who wants to produce a simulated real-time voice ring tone from a regular call.
_ If the answering machine is selective when answering calls (depending of the CID), then it will not answer some calls and among the un-answered calls there will be calls from callers wanting to produce a simulated real-time voice ring tone. Those callers would not have been able to produce a simulated real-time voice ring tone with the answering machine anyway.
_ nowadays, answering machines tend to be in the network of operators. So the recipient of the call can not hear in real-time what the caller says. When the caller falls on an answering machine, he does not know if it is an answering machine on a terminal or an answering machine in the network. In the latter case, the recipient of the call can not hear in real-time what the caller says.
_ if the terminal of the recipient of the call is always on immediate answering mode with an invitation to leave a message, the caller will think he can not produce a simulated real-time voice ring tone.

In this context, an object of the invention is a method that enables a full-duplex regular telephone call allowing two parties to talk and listen at the same time. A call reception mode according to the invention allows the caller to say by live real-time voice who he is and give information about the reason or emergency of the call for example. When the call arrives on the recipient's terminal, a particular application will, under certain circumstances, disable the microphone and open the ring loudspeaker of the recipient's terminal, and automatically answer the incoming call. The caller's live voice will be output on the ring loudspeaker of the recipient's terminal. During the time the caller speaks, the called person's voice or ambient sound in the environment of the recipient terminal will not be heard by the caller, since the recipient's terminal microphone is disabled. The caller does not know if the recipient of the call hears what the caller is saying, nor is able to answer the call at that particular time, which is the same as with the ring tone of a regular call. The recipient of the call then decides to talk or not with the caller. In order to talk with the caller, the recipient of the call will perform an action (press a key on his terminal, command by voice his terminal to allow his voice to be forwarded to the caller, ...) that will instruct the particular application on the recipient's terminal to close the ring loudspeaker and enable the microphone of the recipient's terminal. Then the recipient's voice will be heard by the caller. If the recipient of the call does not want to talk with the caller, the recipient of the call can end the call in a usual way.

According to the invention, a method for generating a phone call through nodes of a network from a first node to a second node operable respectively by a first and a second user comprises the steps of:
- calling and providing from the first node a third node with a call identifier of the second node;
- calling the second node from the third node;
- answering automatically to the third node by the second node, allowing to give out received sensorial data of the first user on the second node and inhibiting transmission from the second node of sensorial data of the second user;
- inviting from the third node the first node to transmit sensorial data of the first user to the second node;
- allowing to transmit sensorial data of the second user to the first node when agreed by the second user perceiving sensorial data given out on the second node.

Typically in a telephone network, the first and second node are calling and called terminals, the call identifier being a telephone number. Differently in the Internet, the first and second nodes are for example computers, the call identifier being an IP address or an alias. The third node being a server in the network, the first user is conscious of using the service of the invention by calling the server instead of calling directly the second user. Sensorial data are for example sounds resulting from the voice or the environment of the users that are given out by a loudspeaker and inhibited by closing a microphone or a particular sound channel. Sensorial data are for example again images resulting from capturing the face or the environment of the users that are given out by a display and inhibited by closing a video camera or a particular video channel.

Advantageously for informing the first user on the ability of the called node to execute the service, the second node calling step is conditioned by a step of checking registration of the second node for receiving calls from the third node.

Advantageously also for respect of willingness of the second user on using or not the service, for example during the night or with a sleeping baby, the answering step is conditioned by a step of checking a running mode of second node for answering or not to the third node.

Various further aspects and features of the present invention made are defined in the appended claims.

Embodiments of the present invention will now be described by way of example only with reference to the accompanying drawings where like parts are provided with corresponding reference numerals and in which:
Figure 1 is schematic block diagram of a first system for providing services according to the invention;
Figures 2a and 2b are a flow diagram representing a first process for providing services according to the invention;
Figure 3 is schematic block diagram of a second system for providing services according to the invention;
Figures 4a and 4b are a flow diagram representing a second process for providing services according to the invention;
Figure 5 is schematic block diagram of a third system for providing services according to the invention.

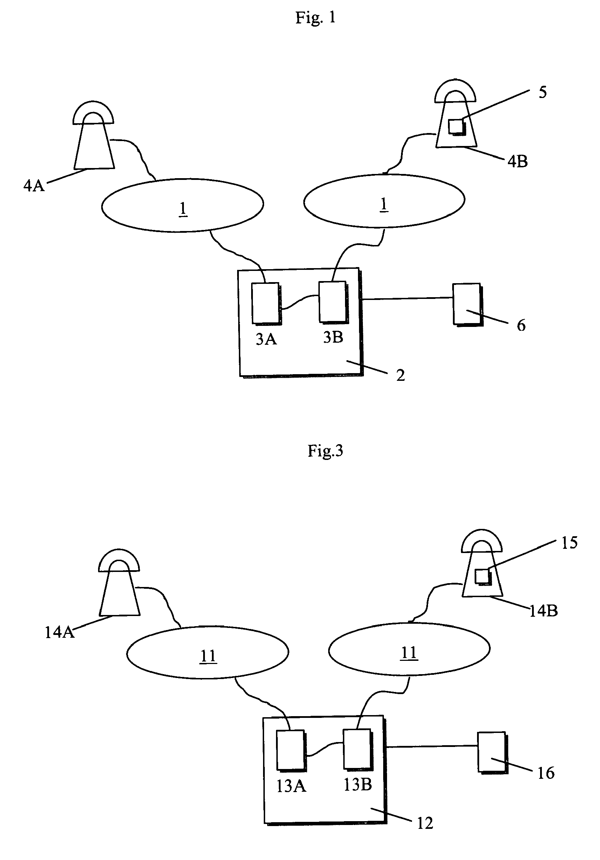

According to a first preferred mode of realization of the invention, figure 1 represents a communication system between two users A and B having respectively a terminal 4A and a terminal 4B, through a telecommunication network 1. Each terminal comprises conventional means like a microphone, a ring loudspeaker and generally an ear loudspeaker that are not specifically represented here. The telecommunication network 1 is for example a phone network for communications on fixed line or mobile or the internet network for communication via internet. The terminal 4B contains hardware and software for running an application 5 programmed for:
_ detecting incoming calls that are from a particular server 2,
_ detecting how incoming calls are currently treated on the terminal,
_ immediately answering a call that is from the server 2 by intercepting and taking in charge the incoming call before it is notified to user B in the form of a usual sensitive signal like a ring tone, vibrations, light pulses or others. Such a usual sensitive signal is used only for the case where the application 5 does not answer the call. For answering, the sound of the microphone on the terminal 4B is first inhibited, and the ring loudspeaker of the terminal 4B is opened to a level that is easily audible by the recipient of the call. Particularly, the level can be configured by user B being the recipient of the call via a configuration interface, between a maximum level and a minimum audible level, guaranteeing voice coming from a caller as a simulated real-time voice ring tone is audible on the recipient's terminal.
_ detecting if user B wants to talk with user A calling him for closing the ring loudspeaker and for opening the microphone of the terminal 4B. Detecting is for example of a particular key pressed or of the handset taken off,
_ detecting if user B does not want to talk with user A for ending the call with the server. Detection is for example of a particular key pressed or of expiration of a period of time without detecting any action from user B.

At the end of the call, application 5 resets the ring loudspeaker and microphone of terminal B to their default states. Application 5 is preferably programmed for, when answering the incoming call, making sure the voice of the caller will be audible on the loudspeaker of the terminal 4B, and disabling any possible interaction by the recipient B of the call until B indicates he wants to interact with user A by pressing a key on the terminal 4B or taking off the handset.

The phone server 2 has phone interfaces 3A, 3B to answer calls from user A being the caller and to make calls to user B being the called party.

A database 6 contains a list of the phone numbers of the subscribers to the service (persons who have decided that under certain conditions, the incoming calls on their phone terminal will be processed in a particular way). For security purpose the database 6 may contain, for each subscriber of the service, a list of allowed caller phone numbers (list of callers, defined by the subscriber of the service, that may try to call the subscriber via the phone server 2) or an indication that any caller may try to call the subscriber via the phone server 2.

The conditions under which incoming calls on the phone terminal 4B will be processed in a particular way by application 5 will be configured by user B via a configuration interface on his terminal. Advantageously, application 5 can be enabled or disabled by B. If enabled, application 5 can be configured to answer calls under one or more of the following defined conditions:
_ terminal 4B being in regular alerting mode.
_ terminal 4B being in vibrator mode in the case of a mobile terminal. The application 5 would disable the vibrator mode to handle the call, and later on, after
the call is over, enable again the vibrator mode.
_ terminal 4B being in lamp mode in the case of a mobile terminal. The application would disable the lamp mode to handle the call, and later on, after the call is over,
enable again the lamp mode.
_ terminal 4B being in other call reception modes or combination of call reception modes (bell + vibrator, ...).
_ all incoming calls being configured by user B to be sent to voice mail in the network while application 5 is enabled. For incoming calls from server 2 to be sent by the network to terminal 4B, the user B is provided with the possibility of asking for all or some (based on the caller CID calling server 2) incoming calls from server 2 not to be sent to voice mail. This is done for example in the operator's network. Server 2 is provided with interrogation means of a server in the operator's network for knowing the treatment status of incoming calls by terminal 4B (calls sent to voice mail) and the status of application 5 (enabled / disabled), then the enabling / disabling of application 5 by user B has to be notified to server 2. Based on this knowledge, server 2 can then decide to make a call towards the terminal 4B. For the case wherein server 2 call the terminal 4B, the network is configured to detect incoming calls from server 2, and route them to the terminal 4B instead of routing them to the voice mail system. This requires cooperation between the service enabling the simulated real-time voice ring tone and the routing / voice mail system of the network of the operator. It can be advantageous to make possible for only certain callers, allowed and defined by user B subscribing to the service, to have their calls sent to the terminal 4B even if the user B has decided to send calls to voice mail. The list of callers allowed to reach the terminal 4B even though user B has decided to send incoming calls to voice mail is defined by the subscriber B via a configuration interface. This list is for example located in database 6 containing the list of the phone numbers of the subscribers of the service (persons who have decided that under certain conditions, the incoming calls on their phone terminal will be processed in a particular way). In a more particular implementation, database 6 further contains, for each subscriber of the service, a list of allowed caller phone numbers or in other words a list of callers, defined by the subscriber of the service, that may try to call the subscriber via the phone server 2 and that could reach the terminal of subscriber B even when subscriber B has decided to send incoming calls to voice mail.

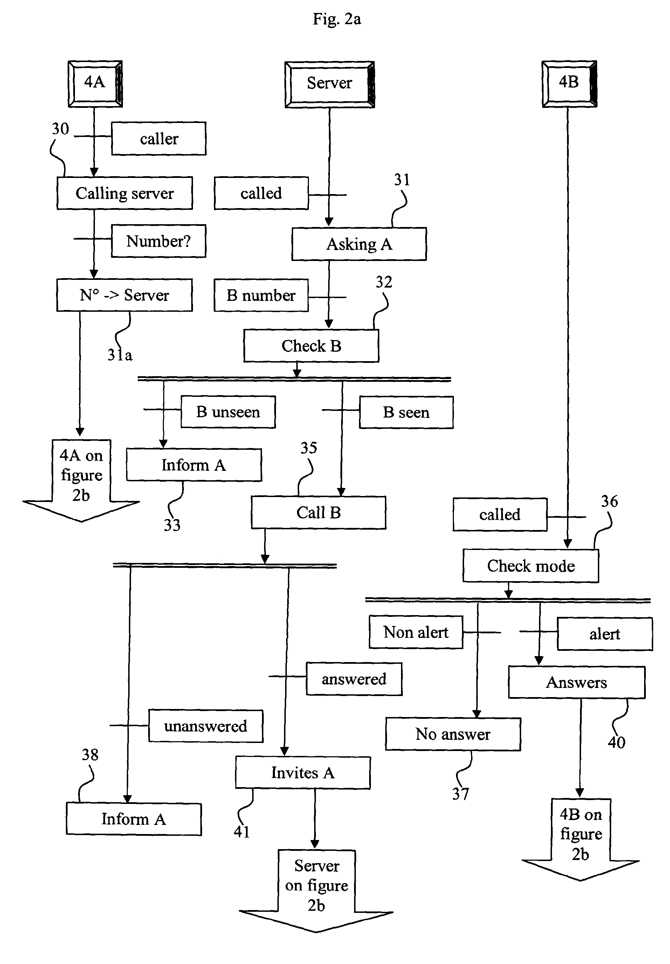

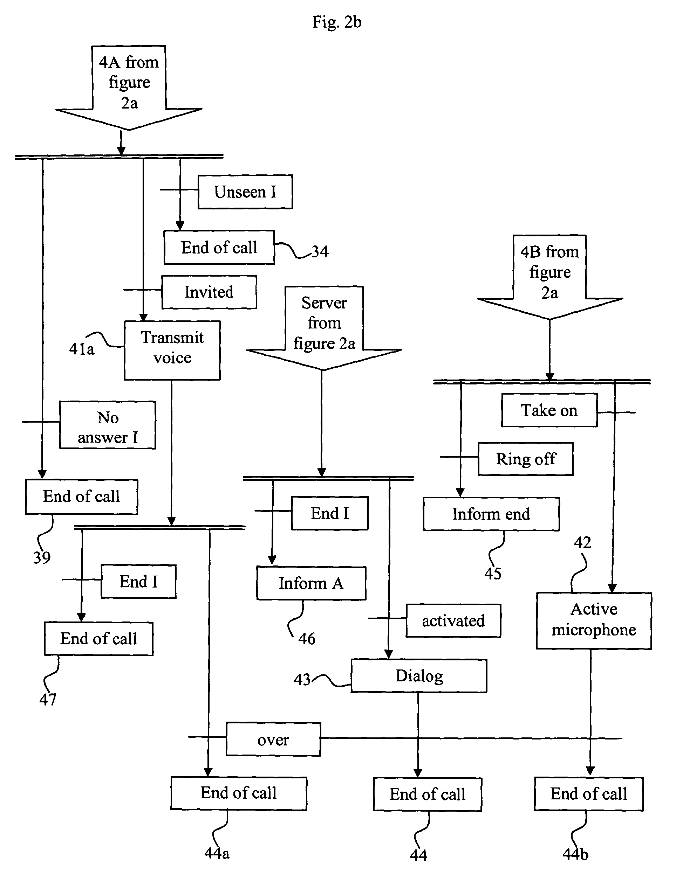

A method according to the invention is now described with reference to figures 2a and 2b.

When user A, being the caller, wants to call user B, being the called party, he dials the phone number of server 2, with his phone device 4A. This event has for effect to activate a step 30 in the phone device 4A for calling the server.

Detection of being called triggers a step 31 in the server which answers the call via the phone interface 3A. The communication between phone 4A and server 2 is then established for asking user A the phone number of the called party. Request of server 2 triggers a step 31 a in phone 4A wherein the phone number of user B input by user A is sent to the server.

In another implementation, steps 30 and 31 could be realized in just one step where user A would dial a feature code assigned to the service (this feature code would have to be assigned by the service provider) followed by the number of the phone number of B and then press for example a send key.

Reception of the phone number of user B in server 2 triggers a step 32 that checks in database 6 containing the phone numbers of the subscribers of the service if the phone number of user B is present in the database. If the phone number of B is unseen because not present, a step 33 is activated in server 2 informing A that B is not a subscriber of the service and that A can not reach B via server 2. Information of B being unseen triggers a step 34 wherein server 2 ends the call with A. If the phone number of B is seen because present, a step 35 is activated in server 2 for calling phone device 4B by its phone interface 3B. For security purpose (not included in figure 2), if subscriber B has created a list of allowed caller phone numbers (list of callers, defined by the subscriber of the service, that may try to call the subscriber via the phone server 2) then server 2 checks if the number of the caller is in the list. If the number of the caller is in the list, server 2, on its phone interface 3B, calls B. If the number of the caller is not in the list, server 2 informs A that A is not allowed reaching B via server 2, and server 2 ends the call with A.

During the time server 2 is trying to reach B, and is waiting for the terminal of user B to answer the call from server 2, server 2 may play some music or voice message to caller A indicating that server 2 is trying to reach user B. Since the service requires application 5 to answer the call after closing the microphone of the terminal of B and opening the ring loudspeaker of the terminal of B, the time between the moment when server 2 initiates the call towards B and the moment when application 5 answers the call should be very short (application 5 should answer immediately, before caller B has any chance to answer).

If server 2 detects (through the phone system signalization) that the call to B does not reach the terminal 4B but another terminal or a voice message system, then server 2 ends the call to user B. Server 2 informs A via a voice announcement that A can not currently contact B via server 2. Server 2 may indicate the reason.

The application 5 located in the phone terminal 4B detects the call from server 2, thanks to a particular field of the telephone signalization (number of the phone server or other). Being called from the server triggers a step 36 for checking the running mode of application 5, in other words if the phone of B is in the defined alerting mode to handle the call.

A detection of the phone terminal of user B not being in the defined alerting mode triggers a step 37 wherein application 5 does not answer the call from server 2.

On the phone interface 3B of server 2, no answer from the terminal of user B to the call of the server triggers a step 38 wherein server 2 informs A via a voice announcement that A can not currently contact B via server 2. Server 2 may indicate the reason (no answer from B because the phone terminal of B is not configured in the right mode, maybe in vibrating mode for example, or other reason). Server 2 then ends the communication with A (step 39).

If the phone terminal of user B is in the defined alerting mode to handle the call, application 5 in a step 40 closes the microphone of the terminal of user B, opens the ring loudspeaker of the terminal of user B, and answers the call. If B speaks, what B says is not sent to server 2.

When the call of server 2 is answered from the terminal of user B on the interface 3B, a step 41 is activated wherein server 2 puts in relation the phone interfaces 3A and 3B. Server 2 invites A to speak, using a sound signal or a voice announcement only sent to the terminal of user A. If server 2 detects any activity (energy coming from voice, DTMF, music ...) from B's terminal just after B's terminal has answered the call from server 2, it possibly results from a voice messaging system on B's side having answered the call. In that situation, server 2 will immediately end the call with the terminal of B, and inform A that a voice messaging system might have answered the call, thereby making the simulated real-time voice ring tone impossible. Server 2 will then end the call with A after inviting A to try again later.

When user A speaks, the ring loudspeaker of terminal 4B gives out what user A says, but user A can not hear what user B says since the microphone of the terminal 4B is off.

If user B wishes to talk to user A after hearing what A said, user B takes on the line by taking off the handset and or pressing for example on the " # " key of his phone terminal. A detection of take on for example when application 5 detects the # key is pressed, triggers a step 42 of opening the microphone of terminal 4B and of closing the ring loudspeaker by opening the ear loudspeaker of terminal 4B.

An interactive dialog between users A and B is then possible in a step 43 resulting from microphone of terminal 4B being activated. The call between terminal 4A and server 2, and the call between server 2 and terminal 4B ends in respectively a step 44a, 44 and 44b when the conversation between user A and user B is over. When user A or user B ends the communication, server 2 ends the other call if required. At the end of the call, application 5 resets the ring loudspeaker and the microphone of the terminal 4B to their default states.

If user B does not wish to talk to A after hearing what user A said, B presses for example on the key of his terminal to ring off or end a call, action which triggers a step 45 informing the server to end the phone call. Or after a defined time, application 5 automatically ends the call. A detection of the end information received by the phone interface 3B in the server triggers a step 46 wherein server 2 informs A via a voice announcement that A can not currently contact B via server 2. Server 2 may indicate the reason (B does not wish to talk with A, or other reason). At the end of the call, application 5 resets the ring loudspeaker and the microphone of the terminal of B to their default states.

Server 2 ends the call with A in a step 47.

In the above mode of realization of the invention, the management of the microphone of the terminal of B, recipient of the call, is performed by application 5 on the terminal of B, and aims at preventing terminal B to send any sound towards caller A's terminal before B eventually indicates he wants to interact with caller A. There is another way to achieve this. Application 5 would not anymore manage the microphone of the terminal of B, and server 2 would be used to block the sound coming from B's terminal (and going towards A's terminal) as long as recipient B would not have indicated he wants to interact with caller A, by for example pressing a key on his terminal (the DTMF is sent to the server and would be detected by the server that would then allow the sound from the terminal of B to reach the terminal of A), or by voice command (the server would use voice recognition to understand recipient B's voice command and would then allow the sound from the terminal of B to reach the terminal of A).

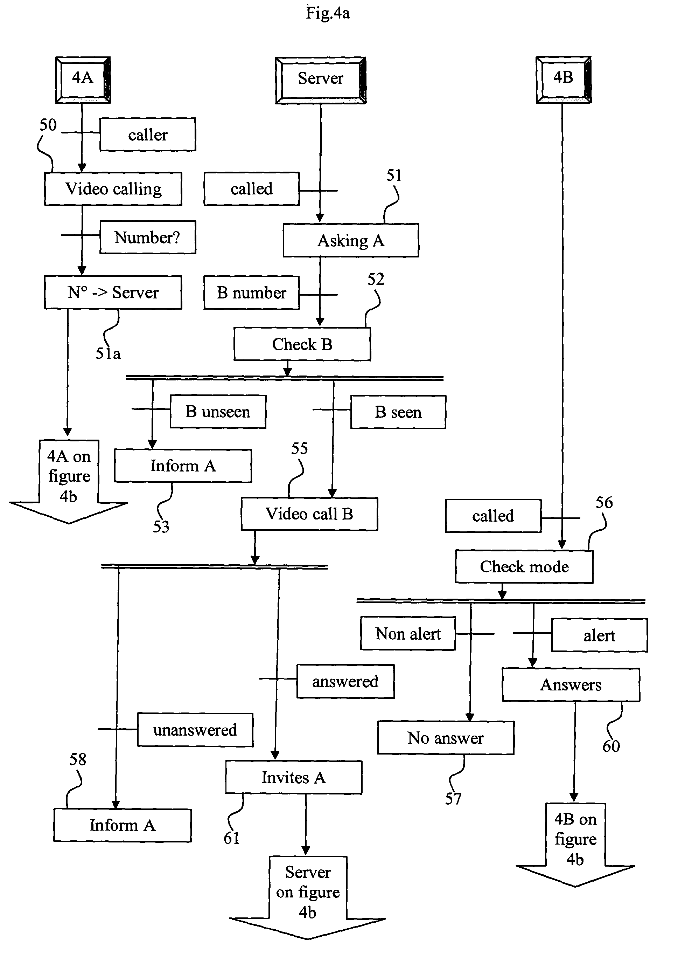

According to a second preferred mode of realization of the invention, figure 3 represents a communication system between two users A and B having respectively a terminal 14A and a terminal 14B, through a telecommunication network 11. Each terminal comprises conventional means like a microphone, a ring loudspeaker, generally an ear loudspeaker, a video camera and a display that are not specifically represented here. The telecommunication network 11 is for example a phone network for communications on fixed line or mobile or the internet network for communication via internet. The terminal 14B contains hardware and software for running an application 15 programmed for:
_ detecting incoming calls that are from a particular server 12,
_ detecting how incoming calls are currently treated on the terminal,
_ immediately answering a call that is from the server 12 by intercepting and taking in charge the incoming call before it is notified to user B in the form of a usual sensitive signal like a ring tone, vibrations, light pulses or others. Such a usual sensitive signal is used only for the case where the application 15 does not answer the call. For answering, the sound of the microphone and the images from the video camera on the terminal 14B are first inhibited, and the ring loudspeaker of the terminal 14B is opened to a level that is easily audible by the recipient of the call. The video images from the caller's terminal will be visible on the terminal 14B. Particularly, the level can be configured by user B being the recipient of the call via a configuration interface, between a maximum level and a minimum audible level, guaranteeing voice coming from a caller as a simulated real-time voice ring tone is audible on the recipient's terminal,
_ detecting if user B wants to talk with or send images to user A calling him for closing the ring loudspeaker and for opening the microphone and the video camera of the terminal 14B. Detecting is for example of a particular key pressed or of the handset taken off,
_ detecting if user B does not want to talk with user A for ending the call with the server. Detection is for example of a particular key pressed or of expiration of a period of time without detecting any action from user B.

At the end of the call, application 15 resets the ring loudspeaker, microphone, video camera and display of terminal B to their default states. Application 15 is preferably programmed for, when answering the incoming call, making sure the voice of the caller will be audible on the loudspeaker of the terminal 14B, and disabling any possible interaction by the recipient B of the call until B indicates he wants to interact with user A by pressing a key on the terminal 14B or taking off the handset.

The phone server 12 has phone interfaces 13A, 13B to answer calls from user A being the caller and to make calls to user B being the called party.

A database 16 contains a list of the phone numbers of the subscribers to the service (persons who have decided that under certain conditions, the incoming calls on their phone terminal will be processed in a particular way). For security purpose the database 16 may contain, for each subscriber of the service, a list of allowed caller phone numbers (list of callers, defined by the subscriber of the service, that may try to call the subscriber via the phone server 12) or an indication that any caller may try to call the subscriber via the phone server 12.

The conditions under which incoming calls on the phone terminal 14B will be processed in a particular way by application 15 will be configured by user B via a configuration interface on his terminal. Advantageously, application 15 can be enabled or disabled by user B. If enabled, application 15 can be configured to answer calls under one or more of the following defined conditions:
_ terminal 14B being in regular alerting mode.
_ terminal 14B being in vibrator mode in the case of a mobile terminal. The application 15 would disable the vibrator mode to handle the call, and later on, after the call is over, enable again the vibrator mode.
- terminal 14B being in lamp mode in the case of a mobile terminal. The application would disable the lamp mode to handle the call, and later on, after the call is over, enable again the lamp mode.
- terminal 14B being in other call reception modes or combination of call reception modes (bell + vibrator, ...).
- all incoming calls being configured by user B to be sent to video mail in the network while application 15 is enabled. For incoming calls from server 12 to be sent by the network to terminal 14B, the user B is provided with the possibility of asking for all or some (based on the caller CID calling server 12) incoming calls from server 12 not to be sent to voice mail. This is done for example in the operator's network. Server 12 is provided with interrogation means of a server in the operator's network for knowing the treatment status of incoming calls by terminal 4B (calls sent to voice mail) and the status of application 15 (enabled / disabled), then the enabling / disabling of application 15 by user B has to be notified to server 12. Based on this knowledge, server 12 can then decide to make a call towards the terminal 14B. For the case wherein server 12 call the terminal 14B, the network is configured to detect incoming calls from server 12, and route them to the terminal 14B instead of routing them to the voice mail system. This requires cooperation between the service enabling the simulated real-time video ring tone and the routing / video mail system of the network of the operator. It can be advantageous to make possible for only certain callers, allowed and defined by user B subscribing to the service, to have their calls sent to the terminal 14B even if the user B has decided to send calls to video mail. The list of callers allowed to reach the terminal 4B even though user B has decided to send incoming calls to video mail is defined by the subscriber B via a configuration interface. This list is for example located in database 16 containing the list of the phone numbers of the subscribers of the service (persons who have decided that under certain conditions, the incoming calls on their phone terminal will be processed in a particular way). In a more particular implementation, database 16 further contains, for each subscriber of the service, a list of allowed caller phone numbers or in other words a list of callers, defined by the subscriber of the service, that may try to call the subscriber via the phone server 12 and that could reach the terminal of subscriber B even when subscriber B has decided to send incoming calls to voice mail.

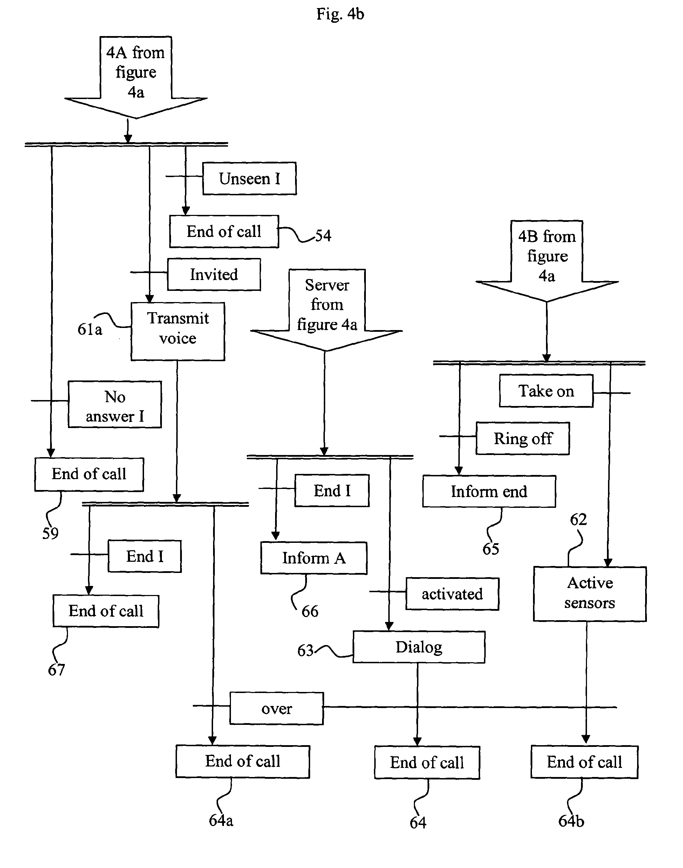

A method according to the invention for simulating a live voice ring tone with live video is now described with reference to figures 4a and 4b.

When user A, being the caller, wants to call user B, being the called party in a video mode, he dials the phone number of server 12, with his phone device 14A. User A can place a video call by pressing a video call button on his terminal 14A being a phone device or by selecting video call in menu of his terminal 14A being a computer or an interactive TV set. This event has for effect to activate a step 50 in the phone device 14A for calling the server.

Detection of being called triggers a step 51 in the server which answers the call via the phone interface 13A. The communication between phone 14A and server 12 is then established for asking user A the phone number of the called party. Request of server 12 triggers a step 51 a in phone 14A wherein the phone number of user B input by user A is sent to the server.

In another implementation, steps 50 and 51 could be realized in just one step where user A would dial a feature code assigned to the service (this feature code would have to be assigned by the service provider) followed by the number of the phone number of B and then press for example a send key. In the case of a menu on a screen, user A directly writes the phone number or an address of user B in a window specifically dedicated to the video call.

Reception of the phone number of user B in server 12, triggers a step 52 that checks if the phone number of user B is present in the database 16 containing the phone numbers of the subscribers of the service. If the phone number of B is unseen because not present, a step 53 is activated in server 12 informing A that B is not a subscriber of the service and that A can not reach B via server 12. Information of B being unseen, triggers a step 54 wherein server 12 ends the call with A. If the phone number of B is seen because present, a step 55 is activated in server 12 for calling phone device 14A by its phone interface 13B in a video mode. For security purpose (not included in figure 4), if subscriber B has created a list of allowed caller phone numbers (list of callers, defined by the subscriber of the service, that may try to call the subscriber via the phone server 12) then server 12 checks if the number of the caller is in the list. If the number of the caller is in the list, server 12, on its phone interface 13B, calls B. If the number of the caller is not in the list, server 12 informs A that A is not allowed reaching B via server 12, and server 12 ends the call with A.

During the time server 12 is trying to reach B, and is waiting for the terminal of user B to answer the call from server 12, server 12 may play some film or video message to caller A indicating that server 12 is trying to reach user B. Since the service requires application 15 to answer the call after closing the microphone and the video camera of the terminal of B and opening the ring loudspeaker of the terminal of B, the time between the moment when server 12 initiates the call towards B and the moment when application 15 answers the call should be very short (application 15 should answer immediately, before caller B has any chance to answer).

If server 12 detects (through the phone system signalization) that the call to B does not reach the terminal 14B but another terminal or a video message system, then server 12 ends the call to user B. Server 12 informs A via a voice announcement or display that A can not currently contact B via server 12. Server 12 may indicate the reason.

The application 15 located in the phone terminal 14B detects the call from server 12, thanks to a particular field of the telephone signalization (number of the phone server or other). Being called from the server triggers a step 56 for checking the running mode of application 15, in other words if the phone of B is in the defined alerting mode to handle the call.

A detection of the phone terminal of user B not being in the defined alerting mode triggers a step 57 wherein application 15 does not answer the call from server 12.

On the phone interface 13B of server 12, no answer from the terminal of user B to the call of the server triggers a step 58 wherein server 12 informs A via a voice announcement and/or a message displayed on terminal 14A that A can not currently contact B via server 12. Server 12 may indicate the reason (no answer from B because the phone terminal of B is not configured in the right mode, maybe in vibrating mode for example, or other reason). Server 12 then ends the communication with A (step 59).

If the phone terminal of user B is in the defined alerting mode to handle the call, application 15 in a step 60 closes the microphone and the camera of the terminal of user B, opens the ring loudspeaker and the display of the terminal of user B, and answers the video call. No images and no sound from the terminal of user B are sent to server 2.

When the call of server 12 is answered from the terminal of user B on the interface 13B, a step 61 is activated wherein server 12 puts in relation the phone interfaces 13A and 13B. Server 12 invites A to speak, using a sound signal or a voice announcement only sent to the terminal of user A or a message only displayed on the terminal 14A. If server 12 detects any activity (energy coming from voice, DTMF, music, video image ...) from B's terminal just after B's terminal has answered the call from server 12, it possibly results from a video messaging system on B's side has answered the call. In that situation, server 12 will immediately end the call with the terminal of B, and inform A that a video messaging system might have answered the call, thereby making the simulated real-time voice or video ring tone impossible. Server 12 will then end the call with A after inviting A to try again later.

When user A speaks, the ring loudspeaker and the display of terminal 14B gives out respectively what user A says and images sent by terminal 14A, but user A can not hear what user B says nor can see any images from terminal 14B since the microphone and the camera of the terminal 4B are off.

If user B wishes to talk to or send images to user A after hearing what A said or seeing images sent by the terminal 14A, user B takes on the line by taking off the handset and or pressing for example on the " # " key of his phone terminal. A detection of take on for example when application 15 detects the # key is pressed, triggers a step 62 of opening the microphone and the camera of terminal 14B and of closing the ring loudspeaker by opening the ear loudspeaker of terminal 14B.

An interactive video dialog between users A and B is then possible in a step 63 resulting from microphone and camera of terminal 14B being activated. The call between terminal 14A and server 12, and the call between server 12 and terminal 14B ends in respectively a step 64a, 64 and 64b when the conversation between user A and user B is over. When user A or user B ends the communication, server 12 ends the other call if required. At the end of the call, application 15 resets the ring loudspeaker, the microphone, the camera and the display of the terminal 14B to their default states.

If user B does not wish to talk to A after hearing what user A said or seeing the images sent by the terminal 14A, B presses for example on the key of his terminal to ring off or end a call, action which triggers a step 65 informing the server to end the video call. Or after a defined time, application 15 automatically ends the call. A detection of the end information received by the phone interface 13B in the server triggers a step 66 wherein server 12 informs A via a voice announcement and or a message displayed on terminal 14A that A can not currently contact B via server 12. Server 12 may indicate the reason (B does not wish to talk with A, or other reason). At the end of the call, application 15 resets the ring loudspeaker, the microphone, the camera and the display of the terminal of B to their default states.

Server 12 ends the call with A in a step 67.

In the above mode of realization of the invention, the management of the microphone and the camera of the terminal of B, recipient of the call, is performed by application 15 on the terminal of B, and aims at preventing terminal B to send any sound or image towards caller A's terminal before B eventually indicates he wants to interact with caller A. There is another way to achieve this. Application 15 would not anymore manage the microphone and the camera of the terminal of B, and server 12 would be used to block the sound and images coming from B's terminal (and going towards A's terminal) as long as recipient B would not have indicated he wants to interact with caller A, by for example pressing a key on his terminal (the DTMF is sent to the server and would be detected by the server that would then allow the sound from the terminal of B to reach the terminal of A), or by voice command (the server would use voice recognition to understand recipient B's voice command and would then allow the sound from the terminal of B to reach the terminal of A).

A third mode of realization of the invention deals with adding the sound of a music file to the voice call described in the first preferred mode of realization of the invention and also to the video call described in the second preferred mode of realization of the invention.

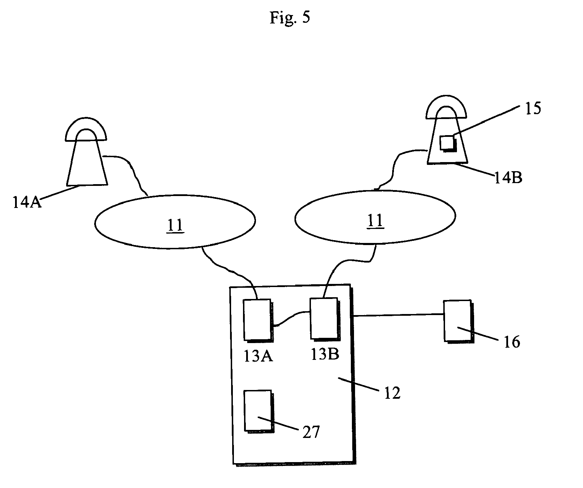

Figure 5 represents a communication system between two users A, B, through a telecommunication network, similar to the one of figure 1 or 3 but wherein the server 12 further comprises a music file 27, here for the case of a video call. In a same way, the server 2 can comprise the music file 27 for the case of a voice call.

The sound of the music file 27 is for being added by the phone server 12 to the call from server 12 on its phone interface 13B when calling user B. The music file is selected by user A through a configuration interface, via mobile wireless internet or internet for example, among a set of different music files provided by user A. How those files are provided by user A will not be described here (they might be purchased by user A from a paying music service, or uploaded by user A to the server 12, ...). The music file to be played might also depend on the phone number that user A is calling, on the day, the time of the day, ... Once again, user A is provided the possibility to determine the music file that server 12 should use depending on various criteria. The sound of the music file will be added to the call between server 12 and user B, after the application 15 on the terminal of B has answered the call from server 12. It will be played:
1. until user B decides to interact with user A, by pressing for example the # key on his terminal : in that case, the music file is considered as a "pushed music ring tone", pushed from user A to user B. The live voice of user A can be added to the sound of the music file until user B decides to interact with user A.
2. until the end of the call between user A and user B : in that case, the music file is considered as a "pushed music ring tone + background music", pushed from user A to user B. The live voice of user A is added to the sound of the music file until the end of the call.

User A can configure "pushed music ring tone" or "pushed music ring tone + background music" through the same interface where user A would set the criteria to determine the music file to use. The sound level of "pushed music ring tone" or "pushed music ring tone + background music" would also be set by user A with the possibility to set different sound levels for the "pushed music ring tone + background music", one before and one after the moment when user B indicates to server 12 that user B wishes to interact with user A. User A can also indicate if he wishes to hear the sound of the music file whenever user B would hear it.

In the method previously described with reference to figure 2 or 4 and for illustration purpose only more specifically with reference to figure 4, when user A dials the phone number of server 12, with his phone device 14A for triggering step 50, user A indicates that he wants to place a video call (by pressing a video call button on his phone device 14A, or by selecting video call in the menu).

On detection of the answer of the terminal of user B to the call of server 12 on its phone interface 13B, server 12 in step 61 puts in relation the phone interfaces 23A and 23B for making a conference. Server 12 also adds the sound of the music file determined by the criteria selected by user A to the calls towards user B and user A if so set by user A. Server 12 informs A, using a sound signal or a voice announcement only sent to A's terminal or a message only displayed on A's terminal, that A can speak. If server 12 detects any activity (energy coming from voice, DTMF, music, video image, ...) from B's terminal just after B's terminal has answered the call from server 12, server 12 will think a video messaging system on B's side has answered the call. In that situation, server 12 will immediately end the call with the terminal of B, and inform A that a video messaging system might have answered the call, thereby making the simulated real-time voice and video + music ring tone impossible. Server 12 will then end the call with A after inviting A to try again later.

In step 62, application 15 sends a notification (DTMF - Dual Tone Mode Frequency - sent or via UUI - User to User Information - ) to server 12 that B wishes to talk with A. Alternatively server 12 detects that B is talking or sending images. Server 12 then stops or doesn't stop adding the sound of the music file to the call(s), depending on prior configuration by user A.

According to a fourth mode of realization of the invention, the file 27 contains multimedia for adding sound and images to the video call described in the second preferred mode of realization of the invention.

## Claims

1. A method for generating a phone call through nodes of a network from a first node to a second node operable respectively by a first and a second user comprising the steps of:
- calling (30, 50) and providing (31, 31 a, 51, 51 a) from the first node a third node with a call identifier of the second node;
- calling (35, 55) the second node from the third node;
- answering (40, 60) automatically to the third node by the second node, allowing to give out received sensorial data of the first user on the second node and inhibiting transmission from the second node of sensorial data of the second user;
- inviting (41, 61) from the third node the first node to transmit sensorial data of the first user to the second node;
- allowing (42, 62) to transmit sensorial data of the second user to the first node when agreed by the second user perceiving sensorial data given out on the second node.

2. A method according to claim 1 wherein second node calling step (35, 55) is conditioned by a step (32, 52) of checking registration of the second node for receiving calls from the third node.

3. A method according to claim 1 or 2 wherein answering step (40, 60) is conditioned by a step (36, 56) of checking a running mode of second node for answering or not to the third node.

4. A system for generating a phone call through nodes of a network from a first node to a second node operable respectively by a first and a second user wherein:
- a third node (2, 12) comprises a first interface (3A, 13A) operable to receive a call and a call identifier of the second node from the first node and a second interface (3B, 13B) operable to call the second node according to the call received on the first interface server and to transmit sensorial data of the first user to the second node when answering;
- the second node is arranged with a program for detecting a call from the third node, for answering to the third node before notifying the second user, for allowing to give out received sensorial data of the first user on the second node and for inhibiting transmission from the second node of sensorial data of the second user up to the moment when the second user activates said transmission of sensorial data.

5. A system according to claim 4 comprising a database 6 of registered second nodes allowed to receive calls from the third node.

6. A system according to claim 4 or 5 wherein the second node is arranged with said program further for checking a running mode of second node before answering or not to the third node.

7. A program comprising executable instructions by a node of a communication network for:
- detecting that a received call comes from a specified node of the network and in that case;
- pre-empting immediately the call for replying to the specified node;
- giving out received sensorial data from the specified node and allowing transmission of locally perceived sensorial data only after authorisation.

8. A program according to claim 7 further comprising instructions for checking a running mode before answering or not to the specified node.
